# EUROPEAN PATENT APPLICATION

(11) **EP 2 050 723 A1**
(43) Date of publication of application: **22.04.2009**
(21) Application number: 07793799.3
(22) Date of filing: 18.06.2007
(51) Int. Cl.: C02F 1/60, C02F 1/46, C02F 5/00

(54) **METHOD AND INTEGRAL SYSTEM FOR TREATING WATER FOR COOLING TOWERS AND PROCESSESS REQUIRING REMOVAL OF SILICA FROM THE WATER**

(30) Priority: 21.06.2006 MX PA06007148
(71) Applicant: Diaz Gonzales Alcocer, Juan Jorge, C.P. 01710 Mexico D.F. (MX)
(72) Inventor: Diaz Gonzales Alcocer, Juan Jorge, C.P. 01710 Mexico D.F. (MX)
(74) Representative: Catherine, Alain
(86) International application number: PCT/MX2007/000073
(87) International publication number: WO 2007/148954

(57) **Abstract**

The present invention relates to an integral system for treating the water for cooling towers and other processes such as reverse osmosis rejection, regeneration of the anionic units of demineralization systems, aircraft blue water and wastewater, in which it is desired to reduce and/or eliminate contaminants such as silica, total, of calcium and magnesium hardness, suspended solids, organic matter and microorganisms, heavy metals, detergents or arsenic, for obtaining a water quality that enables it to be reused in different industrial processes, generating savings in terms of water and chemicals. The system is **characterized in that** the water to be treated passes through an electrochemical cell with plates of aluminum, iron or some other metal, and, when an electric current is applied at an amperage that allows an optimal current density to yield the aluminum required to form a hydroxide of aluminum, iron or some other metal, which, when reacting with the contaminants present in the water to be treated, forms an iodine that is later separated out from the water, enabling the treated water to be reused by this system, by integrating the processes of filtration and ozonation it enables better water quality to be obtained for reuse in cooling towers, industrial processes, general services, irrigation of green areas or any other use.

The technological innovation in the present invention is that it totally eliminates the silica present in industrial waters, allowing reuse of this water in different processes owing to the quality obtained. In addition to reducing the calcium and magnesium hardness salt concentration, preventing the formation of encrustations and, in cooling -tower systems, making it possible to increase concentration cycles, thereby generating savings of water and chemicals, it reduces microbiological proliferation, which will enable industry in general to replace conventional industrial water-treatment programs with this new technological alternative.
The advantages and benefits of the present invention are that it allows reuse and recycling of 100% of the water that has to be discarded in cooling towers, reverse osmosis rejection, regeneration of anionic units of demineralization systems and wastewater from industry, generating financial savings by allowing reuse of the water that is currently necessary to discard, thereby reducing the quantity of required chemicals essential for cooling towers and wastewater, reducing the impact on the environment caused by water being discarded with contaminants and chemicals content that makes it impossible for it to be reused. Furthermore, it allows the elimination of the contaminants present in the water from wells that contain contaminants such as arsenic, cyanide, iron, manganese and microorganisms, enabling the water to be used for drinking.

## Description

### BACKGROUND OF THE INVENTION

This invention relates to an integral system for treating water in order to remove pollutants usually present in cooling towers and other processes, such as reverse osmosis rejection, regeneration of the anionic units of demineralization systems, aircraft blue water and wastewater. The main pollutants removed using this system are silica salts, total hardness, suspended solids, dyes, detergents, arsenic and microorganisms, enabling the increase of the concentration cycles due to the elimination of purges, generating savings in terms of water and chemical products, controlling and avoiding corrosion and encrustation problems, as well as microbial fouling, allowing the reuse of water.

This invention relates to an integral system for treating water for cooling towers, which is installed as a side system of the cooling tower and as a wastewater treatment system, consisting of a ventury ejector, an oxygen concentrator, an ozone generation equipment, a pH sensor, a conductivity sensor, a dosification system, an electrochemical cell with aluminum cells, with screens to produce the turbulence of water, a current rectifier, a system to separate solids from water, a gas-water injection system (ventury ejector), an oxygen concentrator, an ozone generator, and a water-ozone contact tank.

Cooling towers are systems that use water to cool the equipment and systems for the industry in general; in this process, when the water temperature rises, its attributes change and the following issues arise: corrosion, encrustation and microbial growth. These problems are controlled and avoided by adding chemical products and managing to keep the balance between the salts and the concentration, in terms of the solubility of each salt in the water, which increase due to the evaporation produced at the cooling towers. In order to maintain the salts concentration it is required to constantly drain and dispose of water with chemical products. With this new system, the removal of pollutants from the water in the cooling towers, enables the concentration cycles, reducing the amount of water being wasted in the purges of such systems, generating great savings in terms of water and chemical products, and having a positive environmental protection impact; also, by adding sodium bromide as biocide to the recirculation water, it oxidizes with the ozone and the bromide is activated to strengthen the microbial control of the system.

Document **MXPA00009962 (2002-04-18)** describes a water treatment process for cooling towers with high silica contents, but it completely differs from this invention, as it requires a mix of chemical products as corrosion inhibitors, encrustation inhibitors and dispersers based on polymers with low molecular weight, thus, it has no comparison whatsoever with this system.

Document US005271862 (1993-12-21**)** describes a process that inhibits deposits of silica and silicates in cooling tower systems, but it totally differs from this invention, as it requires the application of chemical products (hydroxyphosphonoacetic acid) and a polymer, thus, it may not be compared with this system at all.

Document CA2063294 (1992-03-18**)** describes a process that inhibits deposits of silica and silicates in cooling tower systems, but it completely differs from this invention, as it requires the application of chemical products (hydroxyphosphonoacetic acid) and a polymer, thus, it has no comparison whatsoever with this system.

Document JP20000301195 (2000-10-31**)** describes a process to prevent silica encrustations for cooling tower systems, but it totally differs from this invention, since it requires passing water through a system developed with volcanic rocks and other systems, and it has no comparison whatsoever with this system.

Document JP2002018437 (2002-01-22**)** describes a method and treatment for waters having calcium and silica hardness to reuse the water coming from the purges of cooling towers, but it completely differs from this invention, as such treatment method requires the use of chemical products to lower the pH from 3-6, in order to submit water to decarbonation and, after, water must go through a deionizing system using a membrane and reverse osmosis, and it may not be compared with this system at all.

Document WO2006033450 (2006-03-30**)** describes a process that prevents fouling and inhibits silica deposits in cooling tower systems, but it completely differs from this invention, as it requires the application of chemical products and a copolymer (meth, acrylic acid), as well as of a manomer of the sulf group and the carboxyl group, therefore, it has no comparison whatsoever with this system.

Document US5236673 (1993-08-17**)** describes a process that uses ozone in cooling tower systems, but it totally differs from this invention, as it uses ozone only as a biocide to remove microorganisms and nothing in it relates to removal of silica, thus, it may not be compared with this system at all.

Document US2006060816 (2006-03-23**)** describes a method to control silica encrustation in water systems and cooling tower systems, but it completely differs from this invention, as it requires the application of chemical products (hydrophobically modified polyether polymer) and therefore, it has no comparison whatsoever with this system.

Document US6416672 (2002-07-09**)** describes a method to remove dissolved and colloidal silica and control encrustations caused by silica deposits in cooling tower systems, but it completely differs from this invention, as it requires several filtration, gravity separation, microfiltration and vacuum filtration systems, as well as other separation technologies, thus, it has no comparison whatsoever with this system.

Document JP2002263635 (2002-09-17**)** describes a method to treat wastewater having suspended solids and silica, but it totally differs from this invention, since it requires the use of chemical products to increase the pH from 8-10 for boilers and it may not be compared with this system at all.

Document JP2001170656 (2001-06-26**)** describes a process to treat wastewater that contains solids and silica, for the microelectronic industry, but it totally differs from this invention, as it requires the use of chemical products, such as lime and flocculants, as well as an ultrafiltration system, and may not be compared with this system at all.

Documents US6461518 (2002-10-08**)** and WO0051945 (2002-09-08**)** describe methods to inhibit the formation and deposit of silica encrustations in the water, but completely differ from this invention, as they require the use of chemical products such as polyamines and ether amines, and they have no comparison whatsoever with this system.

The document JP2001096282 (2001-04-10**)** describes a method to remove silica from water in geothermal processes, but it totally differs from this invention, as it requires the use of chemical products, such as aluminum nitrate, and it may not be compared to this process at all.

### DESCRIPTION OF THE INVENTION

This invention is related to the technique of removing species present in the water as soluble and insoluble pollutants, which may cause problems for its use in industry, mainly in the cooling towers, since such process may give rise to the following issues: corrosion, encrustation and microbial growth.

By removing such pollutants from water in cooling towers, we may be able to increase the concentration cycles, reducing the amount of water wasted due to the purges of such systems, and allowing the recycling of water used as spare water with a better quality, as we manage to reduce pollutants that cause problems in such systems, generating savings in terms of water and chemical products, and having a positive environmental care impact.
1.- This invention relates to a method and an integral system for treating water for cooling towers and other processes, such as reverse osmosis rejection, regeneration of the anionic units of demineralization systems, aircraft blue water and wastewater. The main pollutants removed using this system are silica salts, calcium and magnesium total hardness, suspended solids, organic materials, microorganisms, heavy metals, dyes, detergents and arsenic, obtaining a water quality that enables its reuse for several industrial, semi-industrial or domestic processes, generating savings in terms of water and chemical products. The invention consists of:
   a) A ventury system, which is basically an ejector favoring the water-gas (ozone) mix, allowing an optimal mix of water to be treated with ozone gas.
   b) An oxygen concentration system, which separates nitrogen from oxygen present in atmospheric air, by means of a physical filtration process at a given pressure, where we may concentrate the oxygen needed as raw material to produce ozone.
   c) An ozone generation equipment where, once the oxygen is concentrated in the equipment mentioned above, it passes through a high voltage reactor and generates the ozone needed to oxidize all the pollutants present in the water to be treated. The application of ozone gas has numerous purposes. The first one is to oxidize the pollutants causing an alteration in the morphological structure of the silica salt crystals, favoring the formation of sludge and therefore, optimizing the removal of silica from the water in the cooling tower, as well as a reaction due to the oxidation of the pollutants favoring the formation of solids that allow their separation from the water, achieving an optimization of the process. Second, the application of ozone to the water in the cooling tower after the electrochemical cell, increases the efficiency of the water chemical treatment program, by reducing and controlling the corrosion rate, the formation of hardness salts and silica encrustations, keeping controlled the microbial propagation, and reducing the addition of chemical products as part of the programs to treat water for cooling towers.
   d) A pH control system, with a sensor that measures the pH and sends a signal to a plc that sends another signal to a system which conditions the pH so as to keep it within a value between 6.5 and 9.0, by adding sulfuric, hydrochloric, nitric or any organic acid to lower the pH, or by adding an alkaline such as sodium hydroxide, sodium carbonate or any other chemical product that increases the water pH.
   e) A conductivity control system, with a sensor that measures the water conductivity and sends a signal to a plc that sends another signal to a system which conditions the water conductivity value, so as to maintain it within a value between 100 and 20,000 micromhos, by adding sodium chloride or any other chemical product that increases the water conductivity.
   f) An electrochemical cell with aluminum (iron or zinc) cells where aluminum hydroxide is formed (or blocks of compacted and pressed aluminum), that may also be iron or zinc, , which reacts with the pollutants present in the water, forming a sludge (electroflocculation), which is easily separated from water, by applying electrical current (at a given amperage that produces a current density from 0.001 to 3 amperes per square centimeter of the aluminum plates); a given voltage is obtained, depending on the electrical conductivity of water (electrolyte), and such electrical conductivity depends on the concentration of dissolved solids present in the water to be treated; the conductivity may be increased by applying sodium chloride, in order to decrease the voltage, reducing the necessary power and considerably reducing the consumption of the required electric power, thus optimizing the process.
   g) A solid separation or filtering system that could use diverse processes, whether using a gravel, sand, anthracite or activated charcoal filtering system, vacuum filtering, solid from liquid separation through centrifugation, vacuum rotating filters, or any other process for solid - liquid separation, , which allows the separation of solids formed in the water electrochemical reactor.

   With the above, we achieve a water quality that enables its reuse as spare water for cooling towers, with a silica concentration from 0 to 40 parts per million and a reduced concentration of total hardness salts, suspended solids and microorganisms, that allows to increase the concentration cycles, eliminating the loss of water due to purges, so as to reuse the water in the cooling towers, also controlling the corrosion rate, the formation of hardness salts and silica encrustations, avoiding and keeping the microbial propagation controlled, reducing the addition of chemical products.
   In the system, water may be filtered to reduce the contents of suspended solids and insoluble silica, but it may also pass directly through the electrolytic cell without previous filtration and it may also pass directly to the electrochemical reactor, without ozonation, as it may be ozonized before passing through the electrolytic cell to oxidize pollutants and improve the separation of solids and silica. The application of ozone to water in the cooling tower after the electrochemical cell, increases the efficiency of the water chemical treatment program, reducing and controlling the corrosion rate, the formation of encrustations of hardness salts and silica, keeping the microbial propagation controlled and reducing the addition of chemical products of the water treatment program for cooling towers, and, by incorporating the ozonation process with an electrochemical process, the removal efficiency of other pollutants is improved, allowing to obtain a wastewater quality that complies with the standards for its reuse in different industrial procedures.
   The ozonized electrochemical reactor to form aluminum hydroxide and capture the pollutants present in the water, is optimized by controlling a proper water flow and the implementation of screens as static mixers or any other agitation system, to favor the incorporation of aluminum hydroxide formed in this system, to the pollutants present in the water to be treated, so as to later separate the traces of sludge that failed to be separated from the water by means of a filtering system.
2.- The method of this integral system for treating water for cooling towers and other processes consists of:
   a) Introducing the purge water of the cooling tower or wastewater through a ventury ejector system to add ozone.
   b) After, the ozonized water passes through a pH sensor so that it may be conditioned, by adding sulfuric, hydrochloric, nitric or any organic acid to lower the pH, or by adding an alkaline such as sodium hydroxide, sodium carbonate or any other chemical product that increases the water pH, so as to maintain the water with a pH from 6.5 to 9.0. The water then passes through a conductivity sensor to be conditioned, by adding sodium chloride, in order to maintain conductivity within 100 and 20,000 micromhos.
   c) Conditioned water passes to our ozonized electrolytic reactor, which, when applying electric power to a current rectifier, turns alternative electric current into direct electric current, and applying a given current density from 0.001 to 3.0 amperes per square centimeter, we obtain the dissolution of the metal from the anodes to the aluminum plates (or blocks of pressed aluminum), which may also be iron or zinc plates, where the aluminum (iron or zinc) hydroxide that reacts with the pollutants present in the water, forms solid compounds, which are separated from the water as sludge.
   d) Such sludge is separated from the water using a filter or solid separation system.
   e) Clarified and filtered water passes through a contact tank where ozone is added again, in order to maintain an ozone residual from 0.01 to 1.0 milligrams per liter of treated water, improving the water quality so that it may be reused as spare water for cooling towers, which allows to increase the concentration cycles, eliminating the loss of water due to purges, for purposes of also controlling the corrosion rate, the formation of encrustations of hardness salts and silica, keeping the microbial propagation controlled, and reducing the addition of chemical products, that are the current basis for water treatment programs for cooling towers.
   f) Adding sodium bromide as biocide to the recirculation water has the advantage of oxidizing with the ozone and activating the bromine to strengthen the microbial control of the system.
   The technological innovation of this system is that it removes silica by 100% and reduces the concentration of calcium and magnesium hardness salts, which cause the formation of encrustations. It also removes suspended solids in treated water, forming a sludge that is disposed of by means of a solid separation or filtering system; with this, we obtain a water quality that allows its reuse as spare water for cooling towers, with a silica concentration from 0 to 40 parts per million, and reduces the concentration of total hardness salts, suspended solids and microorganisms, that enables the increase of concentration cycles, eliminating the loss of water due to purges, so as to reuse the water in the cooling towers, also controlling the corrosion rate, the formation of encrustations of hardness salts and silica, avoiding and keeping the microbial propagation controlled, reducing the addition of chemical products.
   The system manages to remove up to 100% of silica present in the water for cooling towers and other processes. By incorporating different systems, the efficiency of silica removal is improved, since filtration only removes 20%, which corresponds to insoluble silica, the ozonation oxidizes soluble silica and, along with filtration, allows the removal of 30%, an electrochemical process with no filtration removes 30%, and, when combining an electrochemical process with the application of ozone and a filtering system, we manage to remove 100% of the soluble and insoluble silica present in the water. By conditioning the water adding sodium chloride, we increase the conductivity and decrease the voltage, thus reducing the electric power consumption in the process.
   The key operation of the system is carried out in our ozonized electrolytic reactor (electrochemical cell with aluminum plates), where an electrochemical process takes place: by applying electric power to a current rectifier, the alternative electric current is turned into direct electric current, and, by applying a given current density from 0.001 to 3.0 amperes per square centimeter, we achieve the dissolution of the metal at the anodes to the aluminum plates (or blocks of pressed aluminum), that may be iron or zinc, which are kept submerged in a tank containing water from the cooling tower or wastewater to be treated, and a given voltage is obtained, depending on the electrical conductivity of water (electrolyte). The electrical conductivity depends on the concentration of dissolved solids present in the water to be treated; the conductivity is increased and conditioned at ranges from 100 to 20,000 micromhos by applying sodium chloride to decrease the voltage in order to reduce the electric power consumption and to optimize the process.
   During the application of electric current, hydrogen is produced at the cathodes, forming bubbles that allow the sludge formed with the aluminum hydroxide to float (electroflocculation), and, the rising flow of the water through the cell allows the elevation of the sludge, which afterwards passes through a system to separate solids from water and, finally, through a system that allows to mix solid-free water with an amount of ozone that enables to maintain a residual from 0.01 to 1 part per million (milligrams per liter) of the treated water, and that allows having the advantages and benefits supplied by ozone in the cooling tower systems or in treated wastewater, in compliance with the required quality for its reuse. Adding sodium bromide as biocide to the recirculation water provides the advantage of oxidizing with the ozone and activating the bromine to strengthen the microbial control of the system.
   This method is characterized by passing water to be treated through an electrochemical cell with aluminum plates that, when inducing an optimal amperage, depending on the amount of water to be treated, produces aluminum (or metal) hydroxide that works as a coagulant in the water, capturing oxidized and not oxidized particles present in the water, forming compounds or floccules that separate pollutants from water and form of a sludge, which is also separated, thus allowing to reuse, filter, ozonate and condition treated water, by adding sodium chloride, obtaining a better water quality at a low cost, favoring its reuse in the industry in general.
   The electrolytic process of electrocoagulation electroflocculation, due to the production of aluminum or metal hydroxide, forming insoluble compounds that are separated from the water, favoring the flotation through the electrolytic reactor since hydrogen bubbles caused by the cathodes are formed, with the microbubbles of ozone gas, and maintaining a water rising flow and avoiding sedimentation of such sludge, that is later separated from the water, using a filtration system.
   This invention developed a new process achieved by incorporating basic technologies that, when put together, allow us to obtain a technological innovation that removes 100% of silica and reduces the concentration of calcium and magnesium hardness salts.
   The incorporation of basic technologies concentrate oxygen contained in the environmental air, due to the separation of nitrogen obtained through the gas separation process; such concentrated oxygen passes through a high voltage process, obtaining an optimal ozone production at a high concentration that allows to carry out the oxidation of pollutants present in the water to be treated, so that, afterwards, by incorporating an electrochemical cell with aluminum plates, we may produce aluminum hydroxide, which, when reacting with the pollutants present in the water, may form an insoluble sludge that will be separated from the water by means of a filtration, vacuum or centrifuge system, thus obtaining water with a quality that enables its reuse for diverse industrial processes and/or watering of green areas.
   Water is conditioned by adding sodium chloride to increase conductivity and decrease the voltage, so as to reduce the consumption of electric power in the process.
   When treating wastewater and/or industrial water, we obtain water with a quality that enables its reuse, in compliance with the environmental standards determined for each particular case; the difference in the water quality to be obtained will be achieved with the optimal incorporation of these technologies, developing the system for each particular application and determining particular conditions in each case.
   Therefore, we intend to register the method of this system as our own: The use of an electrochemical system of electrocoagulation / electroflocculation / electroflotation with aluminum / iron / zinc / magnesium and other metal cells to remove silica from the water; the use of an electrolytic cell with ozone, whether before or after (pre-ozonation of post-ozonation) (ozone / electrochemistry / filtration / ozone) for water treatment; the removal of pollutants from the water using ozone and electrochemistry in order to reduce silica salts, total hardness such as calcium and magnesium, chlorides, metals, greases and oils, dyes, organic material, chemical oxygen demand, biological oxygen demand, microorganisms in general, cyanide, arsenic, fluorides in any water type and quality; the addition of a bromine salt, such as sodium bromide, to favor the microbial control through oxidation of the salt with the ozone in the treatment of water for cooling towers; the electrochemical method to remove silica in any type, treatment and/or conditioning of water, whether processing or industrial water or wastewater; any other similar removal or reduction of silica in the water; the use of any electrochemical system to remove and/or reduce silica and total hardness; any other system, process and/or treatment of water for cooling towers, reverse osmosis rejection, system regeneration and/or demineralization plants for anionic-ionic exchange resins, wastewater; or any other process related to removal of silica or total hardness from water.
   The addition of a bromine salt to water treated with ozone favors the oxidation of pollutants, improving the control of microbial propagation of the water system for cooling towers; the application of bromine allows us to obtain regeneration by means of the ozone, since free bromine reacts with the pollutants or microorganisms, it decomposes and, with the action of the ozone, the chemical reaction takes place, forming bromides and bromates that allow the reactivation of the bromine's action in the water.
   The advantages and benefits of this invention are that it allows to reuse and recycle 100% of water that otherwise must be disposed of in the cooling towers, reverse osmosis rejections, regeneration of anionic units of demineralization systems and wastewater produced by the industries, generating monetary savings by reusing the water that currently must be disposed of, thus lessening the amount of chemical products necessary and indispensables for cooling towers and wastewater, reducing the environmental impact caused by the disposal of water containing pollutants and chemical products that impede its reuse, in addition to allowing the removal of pollutants present in the water coming from polluted wells, such as arsenic, cyanide, iron, manganese and microorganisms for the use of potable water.

### SCOPE OF THE INVENTION:

Our invention is based on a water treatment system that incorporates several technologies and processes, which, when put together and applied properly, allows us to remove silica and reduce the concentration of hardness salts in water for cooling towers and reduce the use of chemical products in order to avoid corrosion and encrustation problems and microbial propagation in such systems.

This invention is related to the incorporation of technologies, which are: the concentration of oxygen by separating it from the nitrogen present in the environmental air; the production of ozone by applying high voltage to the passage of oxygen; the incorporation of a controlled electrochemical process to produce aluminum hydroxide in order to capture pollutants present in the water, and controlling the water flow variables and the implementation of screens as static mixers, to favor the incorporation of aluminum hydroxide formed in this system, to the pollutants present in the water to be treated, so as to later separate the traces of sludge that failed to be separated from the water by means of a filtering, vacuum or centrifugation system; after, the water, free from those pollutants, will pass through a ventury system that allows the optimal addition of ozone to the water, in order to maintain a given residual in each stage of the cooling process of industrial water, for purposes of avoiding corrosion, encrustation and microbial propagation problems in the cooling tower system and, by adding sodium bromide as biocide to the recirculation water, it oxidizes with the ozone and the bromide is activated to strengthen the microbial control of the system.

### STAGES OF THE PROCESS:

1. **OZONATION:** Application of ozone gas using a ventury or ejector intended to achieve the maximum efficiency and accomplish the oxidation of the diverse pollutants found in the water to be treated.
2. **ELECTROCHEMICAL CLARIFICATION:** An electrolytic process (electrocoagulation - electroflocculation) is carried out, the electrochemical reaction takes place in the cell with aluminum or iron plates with the pollutants present in the water, such as silica salts, hardness salts, suspended solids, organic material, dyes and microorganisms, detergents, arsenic or any other pollutant, producing an insoluble compound that is precipitated as a sludge and may be separated from the water.
3. **FILTRATION:** The filtration process is carried out using a filtering method or system for solid - liquid separation, which captures the traces of solids or sludge that could not be separated in the foregoing process, thus allowing us to obtain a better quality of treated water.

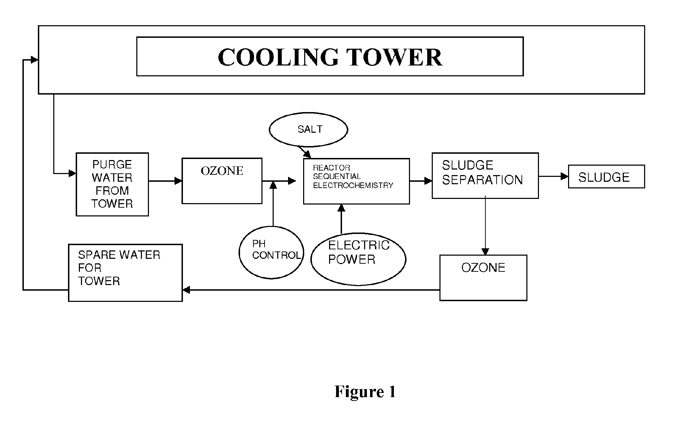

### DESCRIPTION OF THE SYSTEM: (see Figure 1)

1. The water from the purge of cooling towers goes through a liquid-gas ejector system (ventury) and concentrated ozone gas is injected, which is produced by an oxygen concentrator that separates nitrogen from oxygen of atmospheric air, using a PSA system or membrane; such concentrated oxygen (70-95%), passes through a high voltage reactor controlled by an electronic system that regulates the frequency / resonance / voltage / temperature.
2. Ozonized water passes through a pH control system, which regulates the pH optimal value, which receives a signal from the sensor and sends another signal to a system that conditions the pH, to maintain it within a value between 6.5 and 9.0, either by adding sulfuric, hydrochloric, nitric or any other organic acid to reduce the pH, or by adding an alkaline, such as sodium hydroxide, sodium carbonate or any chemical product to increase the pH in the water.
3. Water with an adequate pH, before entering the electrochemical reactor, passes through an automatic system that, using a sensor, monitors and controls the water conductivity and sends a signal to a plc, which sends another signal to a system that conditions the value of conductivity, so as to maintain it within a value between 100 and 20,000 micromhos, by adding a dose of sodium chloride or any chemical product that increases conductivity, keeping such parameter within the ranges previously determined, in order to lessen the voltage and reduce the electric power consumption.
4. Water oxidized with ozone gas and conditioned with optimal pH and conductivity values is fed into an electrochemical cell (electrochemical reactor of electrocoagulation / electroflocculation and electroflotation) with aluminum cells placed at the cathode and the anode, which change polarity periodically (every hour) by means of a timer previously programmed, in order to clean and wear down all the plates simultaneously.
5. The system has a selective electrode for silica that sends a concentration signal to the PLC and controls the current rectifier, so that it may automatically maintain an amperage that controls an optimal current density, since the water flow and volume of the reactor are kept constant and this allows us to optimize the amount of aluminum transferred to the water to remove pollutants present therein, such as silica, as it represents the variable to be controlled in the cooling towers.
6. The sludge formed by the aluminum hydroxide produced in the electrochemical reactor when reacting with the pollutants present in the water, such as silica, calcium and magnesium total hardness, suspended solids and microorganisms found in the water to be treated, is separated from the water by means of a filtration system (gravel, sand, press, rotation, vacuum rotation, centrifuge or any other solid-liquid separation system), depending on what may be most favorable for each system.
7. Water treated and clarified by the electrochemical reactor passes through a gravel, sand of activated charcoal filter that removes any traces of suspended solids and floccules that failed to separate completely from the water.
8. Clarified and filtered water passes through a pressurized contact tank, where it is mixed with ozone, using a pumping system and a ventury to condition the water and maintain an ozone residual from 0.001 to 1.0 milligrams per liter of the treated water and to reuse it as spare water for cooling towers.
9. Bromine chloride is added as biocide to the basin of the tower, which has the particularity of decomposing when it reacts with the microorganisms present in the water, but when having contact with the ozone, it will have a cyclic sanitizing effect, maintaining a constant residual effect in the water in the cooling tower.
10. In the course from the cooling tower flow to the industrial plant and throughout the diverse processes, the bromine and ozone residual is monitored, for purposes of installing ozone generators at the necessary sites, to obtain results that guarantee an adequate treatment of water for cooling towers.

### EXPERIMENTAL RESULTS:

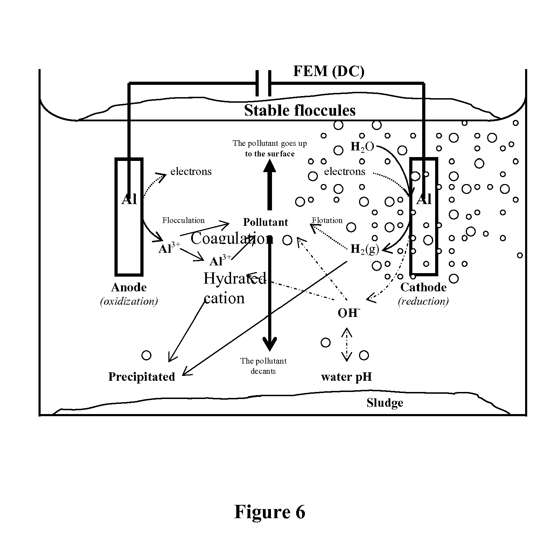

In the electrocoagulation - electroflocculation process (EFP) for treatment of purge water from cooling towers, aluminum electrodes are used, which are dissolved by electrolysis, forming coagulant species (aluminum hydroxides) that destabilize and join together suspended particles or precipitates and absorb dissolved pollutants. As shown in figure 6, the anodic dissolution of aluminum is accompanied by the formation of hydrogen gas in the cathode, whose gas bubbles capture and take to the surface the suspended particles formed due to the removal of pollutants.

### See Figure # 6

In an aluminum electrode cell of the EFP, the anode's reaction is

*Al*↔*Al*³⁺ +3*e* (1)

and in the cathode

2*H*₂*O*+2*e*→H₂+2OH⁻ (2)

The Al³⁺ cation may be hydrated to form various ionic species,

*Al*³⁺+*H*₂*O*→*AlOH*²⁺+*H*⁺ (3)

*AlOH*²⁺+*H*₂*O*→*Al*(*OH*)⁺₂+H⁺ (4)

*AlOH*⁺₂+*H*₂*O*→*Al*(*OH*)₃+H⁺ (5)

*AlOH*₃+*H*₂*O*→*Al*(*OH*)⁻₄+H⁺ (6)

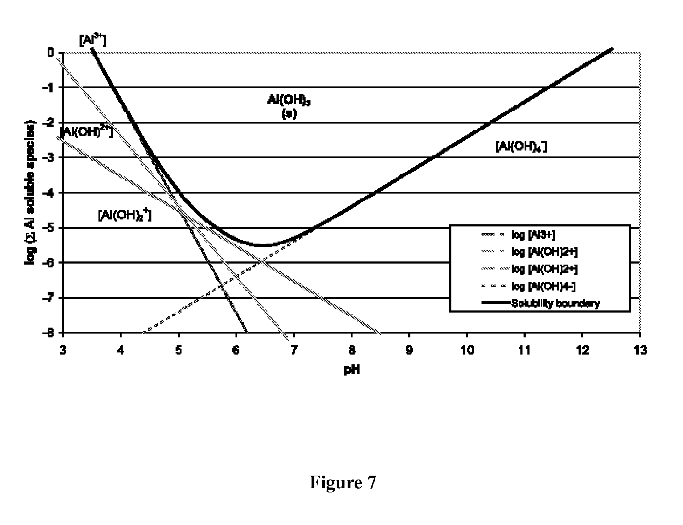

The progress of hydration depends on the metal (Al³⁺) total concentration and the pH value of the solution, as well as of other species present in the solution. Figure 7 shows a solubility diagram for aluminum hydroxide, Al(OH)₃(s), in mg/L, and assuming only the presence of the aluminum species.
**See** **Figure 7****.**
The solubility limits show the thermodynamic equilibria existing between the aluminum dominant species, at a pH value, and the solid aluminum hydroxide. Figure 7 shows that the minimum aluminum solubility occurs at a concentration of 0.03 mg/L and with a pH equal to 6.3. By increasing solubility, the solution turns more acid or more alkaline.
The experimental work was divided in two parts:
A first part where several experiments were conducted using a rectifier with analogue readers for current intensity (I) and potential (E), so as to prove the effect of current intensity, agitation and ozone gas bubbling on the production of Al³⁺ and, consequently, the EFP of silica. During the first three experiments with agitation, 1, 2 and 3 A current intensity was applied and samples were taken of the solution to measure the concentration of silica in ppm in terms of time. After, three experiments were conducted at I = 2 A without agitation, with agitation and finally, with agitation and bubbling ozone gas.
A second part was conducted using the same cell with 10 plates, a *Princeton Applied Research* model 263 A potentiostat/galvanostat, a *PowerSuite* card and software, and *a COMPAQ* computer. The experiments went from 1, 1.5 and 1.9 A, with and without agitation. Finally, several experiments were conducted at 1.9 A with 2 g of NaBr, and with 0.5, 0.75, 1 and 2 g of NaCl. In each experiment with NaCl the progress of conductivity in terms of time was followed.

### First Part

Tables 1, 2 and 3 show the experimental results obtained from the first three experiments for different values of current intensity in terms of time. We may observe that the pH value of the solution is 8.72, with a conductivity value of 1272 µS, i.e., the solution shows low conductivity; the concentration of Ca²⁺, Mg²⁺, phosphates and silica reduces in time; and the Cl⁻ concentration remains practically constant. We may also observe that a 0 ppm silica concentration is reached during the three experiments after 16, 6 and 5 minutes for I= 1, 2 and 3 A, respectively, while table 4 shows the experimental results for the three experiments.

**Table 1. Experimental Results for the EFP Process for I = 1A**

| t | pH | κ(µS) | Total hardness | Ca²⁺ | Mg²⁺ | OH⁻ | Alc. M. | Cl⁻ | Silica | Phosphates |
|---|---|---|---|---|---|---|---|---|---|---|
| (min) | | | (ppm) | (ppm) | (ppm) | (ppm) | (ppm) | (ppm) | (ppm) | (ppm) |
| 0 | 8.72 | 1272 | 240 | 140 | 100 | 8 | 592 | 240 | 103.5 | 4 |
| 1 | 8.34 | 1305 | 232 | 140 | 92 | 8 | 592 | 240 | 93 | 4 |
| 2 | 8.36 | 1330 | 240 | 140 | 100 | 8 | 720 | 260 | 91 | 4 |
| 3 | 8.11 | 1320 | 250 | 140 | 110 | 0 | 704 | 260 | 81 | 3 |
| 4 | 8.15 | 1313 | 240 | 140 | 100 | 0 | 720 | 260 | 76.5 | 2 |
| 5 | 8.3 | 1305 | 180 | 90 | 90 | 0 | 680 | 240 | 72 | 2 |
| 6 | 8.34 | 1202 | 160 | 80 | 80 | 8 | 592 | 248 | 67.5 | 2 |
| 7 | 8.45 | 1284 | 170 | 80 | 90 | 8 | 680 | 300 | 54 | 2 |
| 8 | 8.3 | 1279 | 168 | 84 | 84 | 8 | 640 | 390 | 49.5 | 1 |
| 9 | 8.31 | 1274 | 160 | 90 | 70 | 8 | 600 | 300 | 45 | 1 |
| 10 | 8.23 | 1189 | 156 | 80 | 76 | 0 | 560 | 240 | 45 | 1 |
| 11 | 8.36 | 1252 | 160 | 86 | 74 | 8 | 616 | 240 | 40.5 | 1 |
| 12 | 8.54 | 1166 | 156 | 72 | 84 | 16 | 736 | 280 | 36 | 1 |
| 13 | 8.41 | 1242 | 160 | 72 | 88 | 8 | 592 | 240 | 27 | 1 |
| 14 | 8.65 | 1275 | 144 | 88 | 56 | 16 | 582 | 260 | 9 | 1 |
| 15 | 8.6 | 1270 | 144 | 70 | 74 | 24 | 586 | 240 | 4.5 | 1 |
| **16** | **8.62** | **1140** | **136** | **60** | **76** | **24** | **580** | **240** | **0** | **1** |
| 17 | 8.7 | 1135 | 120 | 66 | 54 | 24 | 540 | 240 | 0 | 1 |
| 18 | 8.75 | 1130 | 100 | 50 | 50 | 24 | 516 | 240 | 0 | 1 |
| 19 | 8.76 | 1132 | 88 | 40 | 48 | 24 | 500 | 240 | 0 | 1 |
| 20 | 9.05 | 1136 | 84 | 40 | 44 | 24 | 464 | 240 | 0 | 1 |

**Table 2. Experimental Results for the EFP Process for I = 2 A**

| t | pH | κ(µS) | Total hardness | Ca²⁺ | Mg²⁺ | OH- | Alc. M. | Cl- | Silica | Phosphates |
|---|---|---|---|---|---|---|---|---|---|---|
| (min) | | | (ppm) | (ppm) | (ppm) | (ppm) | (ppm) | (ppm) | (ppm) | (ppm) |
| 0 | 8.72 | 1272 | 240 | 100 | 140 | 8 | 592 | 240 | 103.5 | 4 |
| 1 | 7.47 | 1261 | 200 | 72 | 128 | 0 | 400 | 360 | 90.5 | 4 |
| 2 | 7.47 | 1225 | 176 | 64 | 112 | 0 | 376 | 360 | 67.5 | 3 |
| 3 | 7.52 | 1244 | 166 | 56 | 110 | 0 | 376 | 360 | 22.5 | 1 |
| 4 | 7.8 | 1210 | 152 | 56 | 96 | 0 | 384 | 320 | 18 | 1 |
| 5 | 7.58 | 1131 | 120 | 48 | 72 | 0 | 346 | 280 | 4.5 | 1 |
| **6** | **8.11** | **1105** | **120** | **48** | **72** | **0** | **320** | **272** | **0** | **1** |
| 7 | 8.27 | 1081 | 120 | 40 | 80 | 0 | 344 | 272 | 0 | 1 |
| 8 | 8.1 | 1094 | 104 | 40 | 64 | 0 | 280 | 280 | 0 | 1 |

**Table 3. Experimental Results for the EFP Process for I = 3 A**

| t | pH | κ(µS) | Total hardness | Ca²⁺ | Mg²⁺ | OH- | Alc. M. | Cl- | Silica | Phosphates |
|---|---|---|---|---|---|---|---|---|---|---|
| (min) | | | (ppm) | (ppm) | (ppm) | (ppm) | (ppm) | (ppm) | (ppm) | (ppm) |
| 0 | 8.72 | 1272 | 240 | 140 | 100 | 8 | 592 | 240 | 103.5 | 4 |
| 1 | 8.1 | 1277 | 240 | 88 | 152 | 0 | 624 | 240 | 103.5 | 6 |
| 2 | 7.8 | 1253 | 200 | 80 | 120 | 0 | 584 | 240 | 90 | 2 |
| 3 | 7.81 | 1238 | 192 | 88 | 104 | 0 | 550 | 240 | 67.5 | 2 |
| 4 | 7.91 | 1210 | 140 | 80 | 60 | 0 | 560 | 240 | 22.5 | 1 |
| **5** | **8.23** | **1183** | **112** | **88** | **24** | **8** | **480** | **240** | **0** | **1** |

**Table 4. Silica Concentration in Terms of Time and of I.**

| **Time** | **I=1A** | **I=2A** | **I=3A** | **Time** | **I=1A** | **I=2A** | **I=3A** |
|---|---|---|---|---|---|---|---|
| **Min** | **ppm** | **ppm** | **ppm** | **Min** | **ppm** | **ppm** | **ppm** |
| **0** | 103.5 | 103.5 | 103.5 | **8** | 49.5 | | |
| **0.5** | 100 | 100 | 103.5 | **8.5** | 46 | | |
| **1** | 99 | 100 | 103.5 | **9** | 45 | | |
| **1.5** | 99 | 65 | 100 | **9.5** | 45 | | |
| **2** | 99 | 67.5 | 90 | **10** | 45 | | |
| **2.5** | 80 | 45 | 83 | **10.5** | 42 | | |
| **3** | 81 | 22.5 | 67.5 | **11** | 40.5 | | |
| **3.5** | 78 | 20 | 55 | **11.5** | 38 | | |
| **4** | 76.5 | 22.5 | 22.5 | **12** | 36 | | |
| **4.5** | 74 | 12.5 | 20 | **12.5** | 31 | | |
| **5** | 72 | 4.5 | **0** | **13** | 27 | | |
| **5.5** | 70 | 18 | | **13.5** | 15 | | |
| **6** | 67.5 | 18 | | **14** | 9 | | |
| **6.5** | 60 | **0** | | **14.5** | 7 | | |
| **7** | 54 | | | **15** | 4.5 | | |
| **7.5** | 51 | | | **15.5** | 3 | | |
| | | | | **16** | **0** | | |

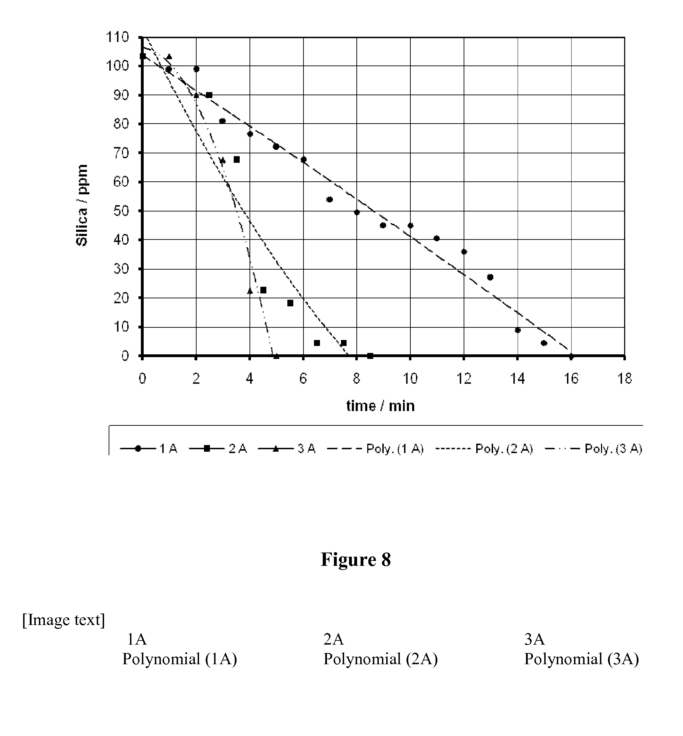

The above allows us to observe that zero concentration of silica during the second experiment is actually reached around 5 minutes. Figure 8 shows the change in the silica concentration in terms of time.
**See** **Figure 8****.**

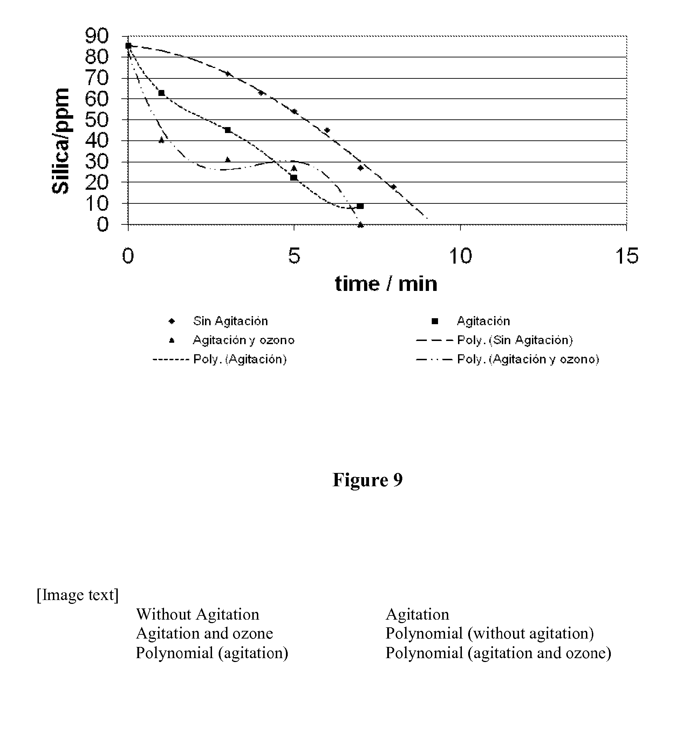

Three EFP experiments were carried out having an initial concentration of 85.5 ppm of silica and a value of I = 2 A. The first one was conducted without agitation; in the second one, the electrolyte was agitated; and in the third experiment, agitation was maintained and ozone gas was bubbled. From the results obtained, which are shown in table 5 and figure 9, we may observe that zero silica concentration is achieved first and in the following order: 3^{rd} experiment > 2^{nd} experiment > 1^{st} experiment. The above suggests that a better mix promotes the EFC and the faster disappearance of silica from the solution.

**Table 5. Silica Concentration in Terms of Time for I = 2 A and Different Operating Conditions**

| | **Without agitation** | **With agitation** | **With agitation plus O₃ injection** |
|---|---|---|---|
| t / min | Silica / ppm | Silica / ppm | Silica / ppm |
| 0 | 85.5 | 85.5 | 85.5 |
| 1 | ***80*** | 63 | 40.5 |
| 2 | 75 | ***50*** | ***37*** |
| 3 | 72 | 45 | 31.5 |
| 4 | 63 | 39 | 29 |
| 5 | 54 | 22.5 | 28 |
| 6 | 45 | 10 | 22 |
| 7 | 27 | 8 | 0 |
| 8 | 18 | 0 | |
| 9 | 0 | | |

**See** **Figure 9****.**

### Second Part

Several experiments were conducted with purge water by chronopotentiometry at I = 1, 1.5 and 1.9 A, and for the particular case of I = 1.9 A with 2 g of NaBr and with 0, 0.5, 1 and 2 g of NaCl. The results obtained were used to determine ... **See** **Figure 10****./** **Figure 11****. /** **Figure 12****. /** **Figure 13****. /** **Figure 14****. /** **Figure 15****. /** **Figure 16****.**

**Table 6. Silica Separated by EFC and Al³⁺ Produced for I = 1A.**

| **Separated silica** | | **Produced Al** | | | | |
|---|---|---|---|---|---|---|
| **t /min** | **Silica / ppm** | **Silica / g L⁻¹** | **Silica / mol L⁻¹** | **Al³⁺ /** g L⁻¹ | **Al³⁺ / ppm** | **Al³⁺ / mol L⁻¹** |
| 0 | 103.5 | 0.1035 | ***1.725*** | 0.000 | 0 | 0 |
| 1 | 99 | 0.099 | 1.650 | 0.003 | 2.99 | 0.111 |
| 2 | 99 | 0.099 | 1.650 | 0.006 | 5.99 | 0.222 |
| 3 | 81 | 0.081 | 1.350 | 0.009 | 8.98 | 0.333 |
| 4 | 76.5 | 0.0765 | 1.275 | 0.012 | 11.98 | 0.444 |
| 5 | 72 | 0.072 | 1.200 | 0.015 | 14.97 | 0.555 |
| 6 | 67.5 | 0.0675 | 1.125 | 0.018 | 17.97 | 0.666 |
| 7 | 54 | 0.054 | 0.900 | 0.021 | 20.96 | 0.777 |
| 8 | 49.5 | 0.0495 | 0.825 | 0.024 | 23.96 | 0.888 |
| 9 | 45 | 0.045 | 0.750 | 0.027 | 26.95 | 0.999 |
| 10 | 45 | 0.045 | 0.750 | 0.030 | 29.95 | 1.110 |
| 11 | 40.5 | 0.0405 | 0.675 | 0.033 | 32.94 | 1.221 |
| 12 | 36 | 0.036 | 0.600 | 0.036 | 35.94 | 1.332 |
| 13 | 27 | 0.027 | 0.450 | 0.039 | 38.93 | 1.443 |
| 14 | 9 | 0.009 | 0.150 | 0.042 | 41.93 | 1.554 |
| 15 | 4.5 | 0.0045 | 0.075 | 0.045 | 44.92 | ***1.665*** |
| 16 | 0 | 0 | 0 | 0.048 | 47.92 | 1.776 |

### Development:

We used a cell with 10 aluminum plates with 0.07, 0.11 and 0.00635 m in height, width and thickness, respectively. The total anodic area (9 sides) was 0.0693 m². The plates were separated by 0.005 m from each other.

### Material and equipment:

- 1 rectifier operating in the interval from 0 to 5 A and from 0 to 20 V.
- 1 *Hatch* laboratory kit to confirm silica.
- 1 cell with 10 aluminum plates
- 50 L of purge water from cooling towers.
- NaBr and NaCl salts.
- 1 calomel electrode
- 3 1000 mL beakers
- 4 200 mL beakers
- *A Princeton Applied Research* model 263 A potentiostat/galvanostat. This equipment handles a ±20 V voltage and a ± 2 A current intensity, controlled by a *COMPAQ* computer with a *Power Suite* card and software.
- *A Power Suite* card and software, *Sistemas Automatizados Industriales* brand, which allows us to carry out corrosion, cyclic voltammetry, chronoamperometry, open circuit potential and chronopotentiometry techniques, as well as electrochemical impedance techniques.
- 1 *Perkin-Elmer* model 2100 Atomic Absorption Spectrometry equipment, which enables working under the Llama modality (air/acetylene and nitrous oxide /acetylene), model HGA-700 Graphite Furnace with a model AS-70 automatic sample injector, a model MHS-10 Hydride Generator.
- 1 conductimeter
- 1 multimeter.
- pH paper.

### BRIEF DESCRIPTION OF THE FIGURES, DRAWINGS AND GRAPHS

**Figure 1****.** Describes the diagram of the integral water treatment system

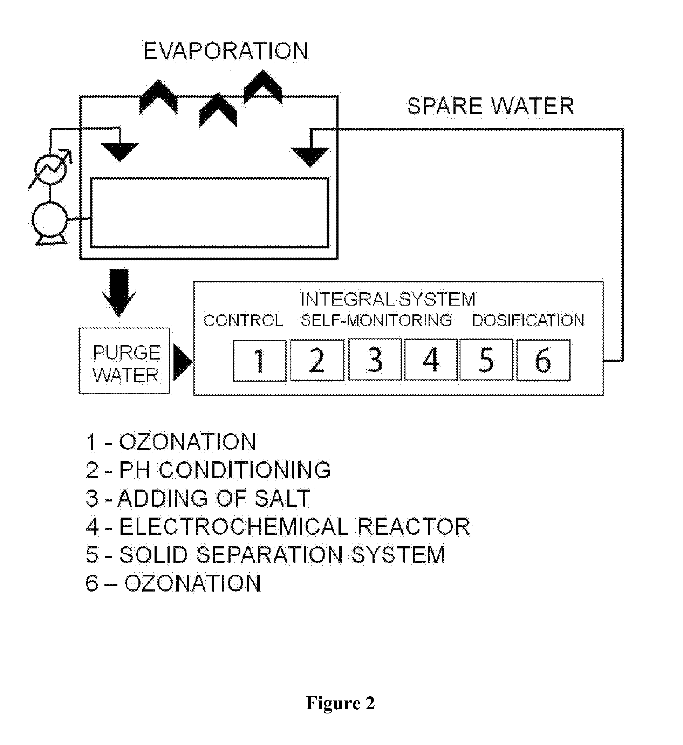

**Figure 2****.** Describes the process of the integral water treatment system

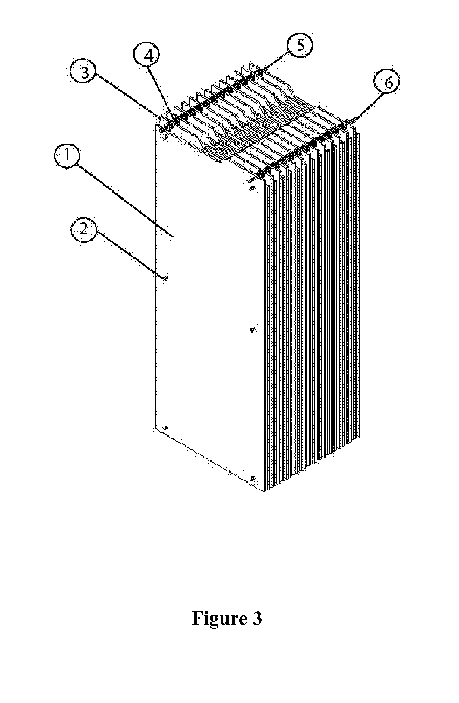

**Figure 3****.** Describes an electrochemical cell, where: 1) aluminum plate, **2)** separators between the isolating material plates, which work as screens to produce turbulence in the water, thus favoring the reaction of the aluminum hydroxide with the pollutants present in the water to be treated, 3) strap in the intercalated plates that allows the connection of the electrodes, **4)** distance between the plates, **5)** positive electrode, **6)** negative electrode.

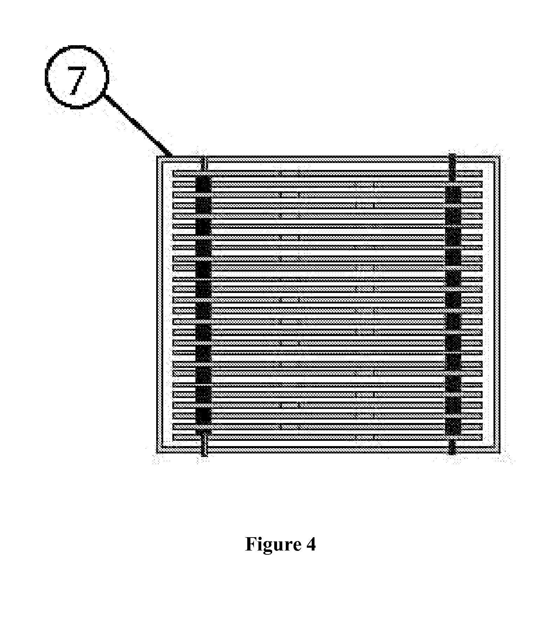

**Figure 4**. Describes the cell of the electrochemical reactor viewed from above, where: 7) ozonized electrolytic reactor.

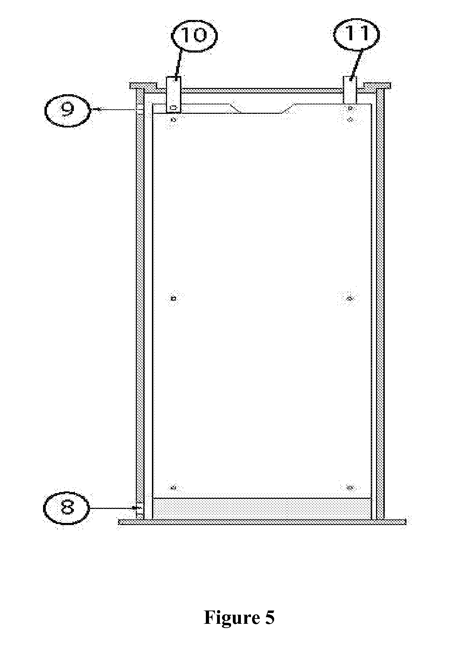

**Figure 5****.** Cut of the electrochemical reactor cell, where: **8)** water inlet, **9)** water outlet, **10)** positive contact, 11) negative contact.
**Figure 6****.** Interactions occurring in an EFP cell.
**Figure 7****.** Solubility diagram for aluminum hydroxide, considering only the aluminum species.
**Figure 8****.** Silica concentration (y axis) in terms of time (x axis) for different values of current intensity (I), 1A, 2A, 3A.
**Figure 9****.** Silica concentration for different operating conditions.

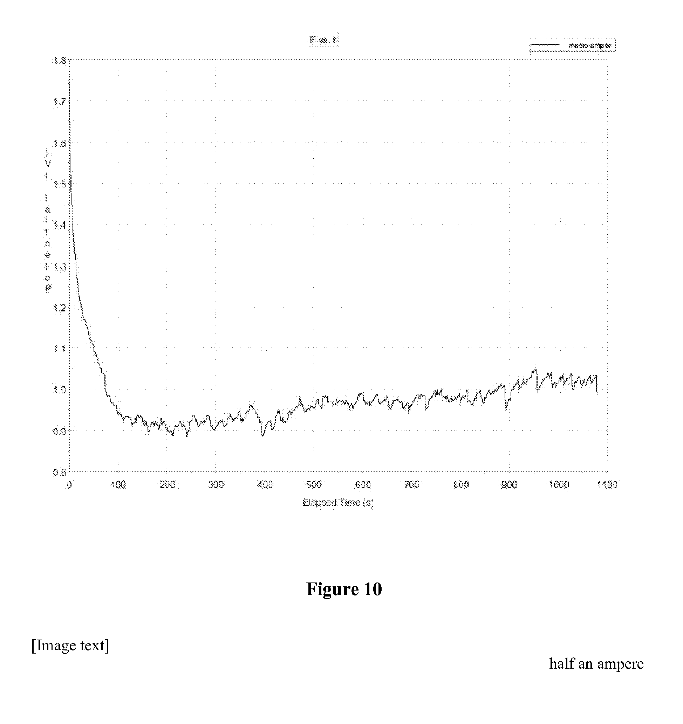

**Figure 10****.** Potential graph in terms of time for I = 1A

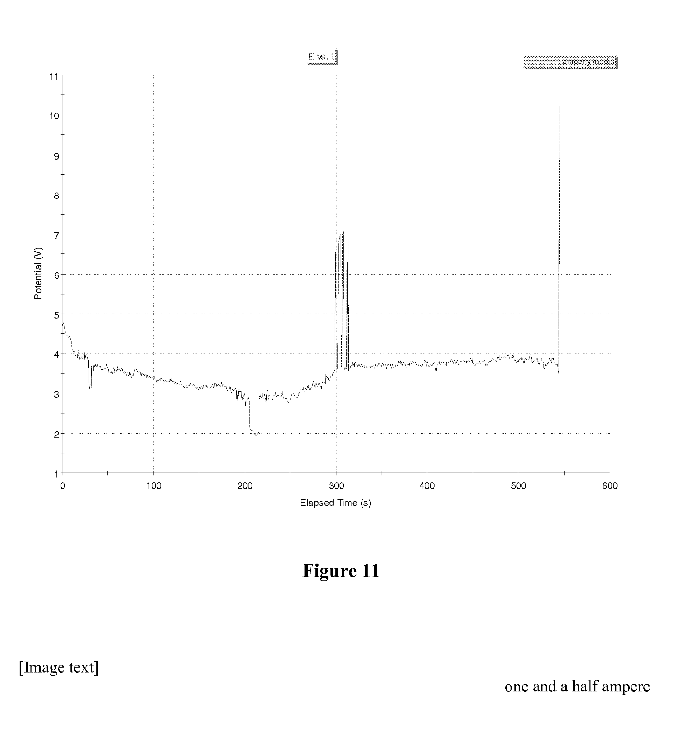

**Figure 11****.** Potential graph in terms of time for I = 1.5 A

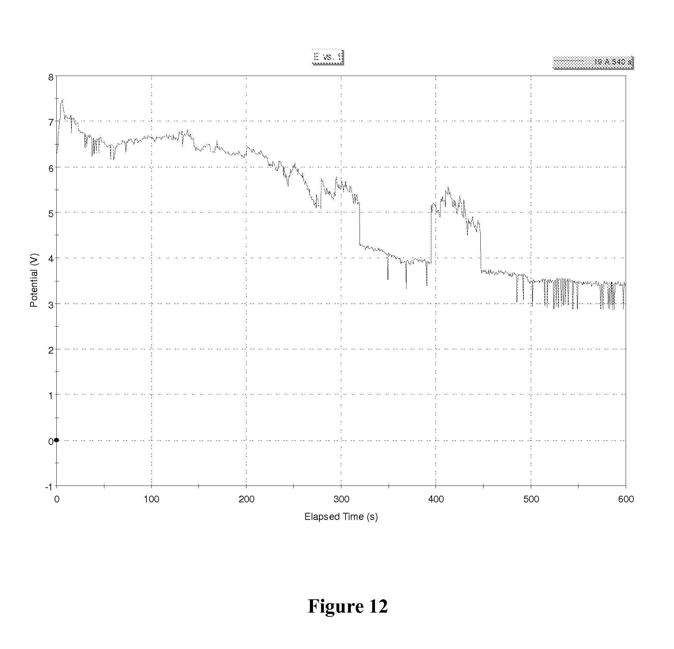

**Figure 12****.** Potential graph in terms of time for I = 1.9 A

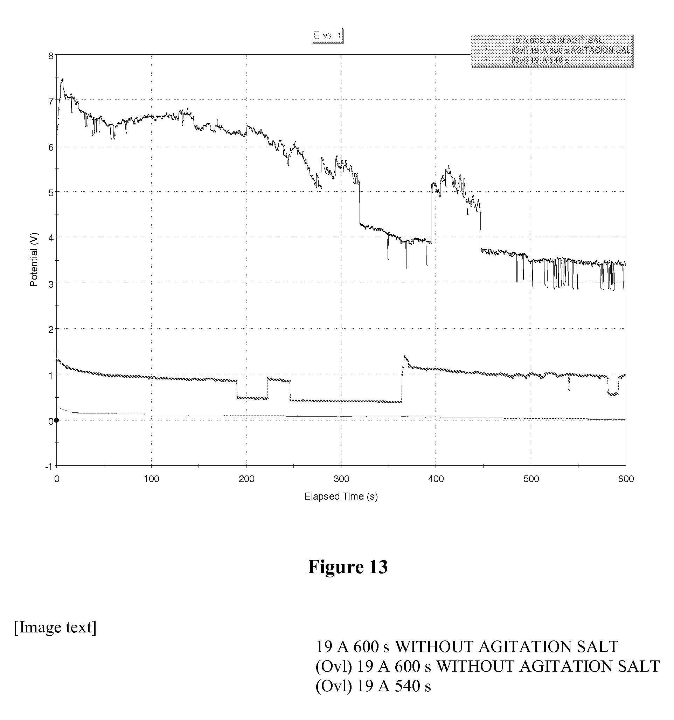

**Figure 13****.** Potential graph in terms of time for I = 1.9 A The EFC curves of the solution represent: Solution without salt (higher curve), solution with 2 g of NaBr (intermediate curve), solution with 2 g of NaCl (lower curve).

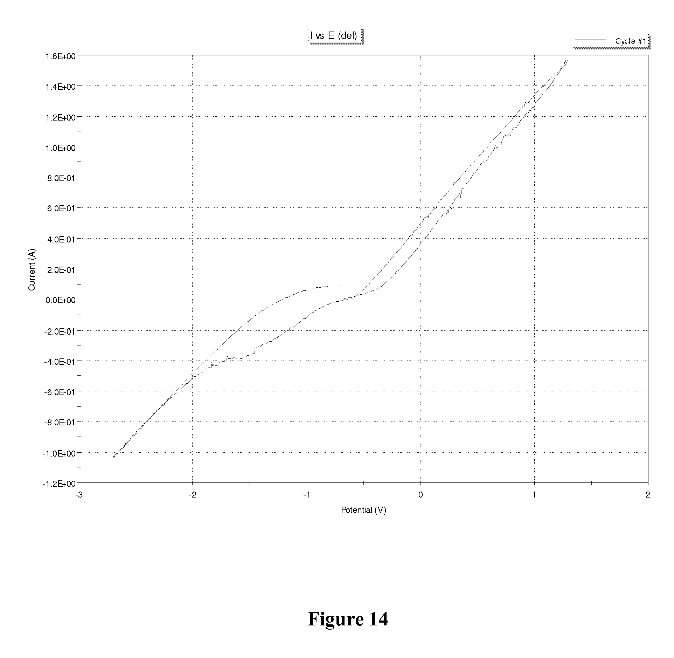

**Figure 14****.** Cyclic voltamperometry of the solution with 2 g/L of NaBr.

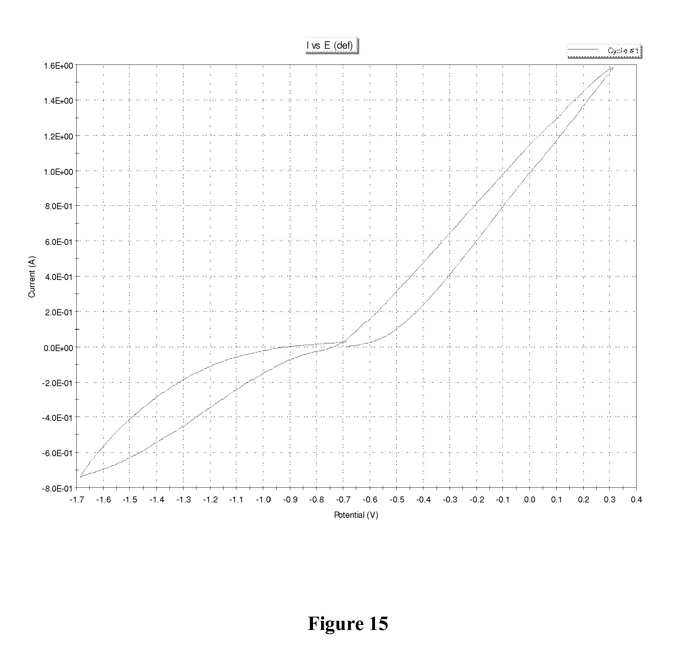

**Figure 15****.** Cyclic voltamperometry of the solution with 2 g/L ofNaCl.

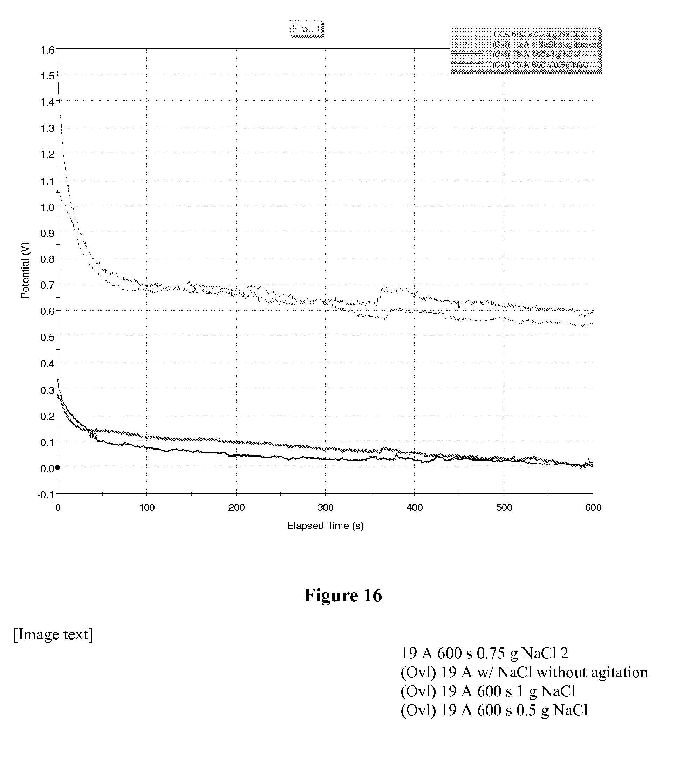

**Figure 16****.** Chronopotentiometric curves of the solution at I= 1.9 A and different initial concentration of salt: 0.5 g of NaCl (first higher curve), 0.75 g of NaCl (second higher curve), 1 g of NaCl (first lower curve) and 2 g of NaCl (second lower curve).

## Claims

1. An integral system for treating water for cooling towers and other processes, such as reverse osmosis rejection, regeneration of the anionic units of demineralization systems, aircraft blue water and wastewater, where pollutants such as silica, calcium and magnesium total hardness, suspended solids, organic materials, microorganisms, heavy metals, dyes, detergents and arsenic are reduced and/or removed, obtaining a water quality that allows its reuse for several industrial, semi-industrial or domestic processes, generating savings in terms of water and chemical products. The technological innovation in our system is that it removes silica by 100% and reduces the concentration of calcium and magnesium hardness salts, which cause the formation of encrustations. It also removes suspended solids in treated water, forming a sludge that is disposed of using a solid separation or filtering system; with this, we obtain a water quality that enables its reuse as spare water for cooling towers, with a silica concentration of 0 to 40 parts per million and reducing the concentration of total hardness salts, suspended solids and microorganisms, allowing the increase of concentration cycles, eliminating the loss of water due to purges, so as to reuse the water in the cooling towers, also controlling the corrosion rate, the formation of encrustations of hardness salts and silica, avoiding and keeping the microbial propagation controlled, reducing the addition of chemical products. This system includes the following:
a) A ventury ejector system, b) An oxygen concentration system, c) An ozone generation equipment, d) A pH control system, e) A conductivity control system, **characterized by** f) An electrochemical cell with aluminum plates (iron, zinc or any other metal that reacts with silica in order to separate it from the water), g) A solid separation system or filtering system, h) An oxygen concentration system, i) An ozone generation equipment.

2. The system, according to claim 1 above, may remove up to 100% of silica present in the water for cooling towers and other processes; by incorporating different systems, the efficiency of silica removal is improved, since filtration only removes 20%, which corresponds to insoluble silica, the ozonation oxidizes soluble silica and, along with filtration, it allows the removal of 30%, an electrochemical process with no filtration removes 30%, and, when incorporating an electrochemical process with application of ozone and a filtering system, we manage to remove 100% of the soluble and insoluble silica present in the water. By conditioning the water adding sodium chloride, we increase the conductivity and decrease the voltage, thus reducing the electric power consumption in the process.

3. The system, in accordance with claim 1 above, manages to remove up to 100% of the silica present in the water for cooling towers, rejections of the reverse osmosis process, rinsing for plant regenerations, ionic exchange systems in anionic processes, and other processes where silica removal from water is required.

4. This integral water treatment system, pursuant to claim 1 above, **characterized by** passing water through an ozonized electrolytic cell, obtaining a water quality that enables its reuse as spare water for cooling towers, with a silica concentration from 0 to 40 parts per million, and reducing the concentration of total hardness salts, suspended solids and microorganisms, which allows the increase of concentration cycles, eliminating the loss of water due to purges, so as to reuse the water in the cooling towers.

5. With this system, according to claim 1 above, [water] may be filtered to reduce the content of suspended solids and insoluble silica, but it may also pass directly to the electrolytic cell, with no previous filtration.

6. Water without being ozonized, in accordance with claim 1 above, may pass directly to the electrochemical reactor, with the option of being ozonized before passing through the electrolytic cell in order to oxidize pollutants and improve the separation of solids and silica.

7. This system, according to claim 1 above, **characterized by** the application of ozone to water in the cooling tower after the electrochemical cell, which increases the efficiency of the water chemical treatment program, by reducing and controlling the corrosion rate, the formation of hardness and silica salts encrustations, keeping controlled the microbial propagation and reducing the addition of chemical products of the water treatment programs for cooling towers.

8. This integral water treatment system, pursuant to claim 1 above, **characterized by** incorporating the ozonation process with an electrochemical process, thus improving the efficiency of the removal of silica and other pollutants, allowing to obtain a quality in wastewater that complies with the standards, so that it may be reused in several industrial processes, since, when passing concentrated oxygen through a high voltage reactor, the ozone needed to oxidize all pollutants present in the water to be treated is produced. The application of ozone gas has numerous purposes. The first one is the oxidation of pollutants causing an alteration in the morphological structure of the silica salt crystals, favoring the formation of sludge and, therefore, optimizing the removal of silica from the water of the cooling tower, as well as a reaction due to the oxidation of the pollutants, favoring the formation of solids that allow their separation from the water, achieving an optimization of the process. The second purpose of the application of ozone to the water in the cooling tower after the electrochemical cell, is to increase the efficiency of the water chemical treatment program, by reducing and controlling the corrosion rate, the formation of hardness and silica salts encrustations, keeping controlled the microbial propagation and reducing the addition of chemical products of the water treatment programs for cooling towers.

9. An integral method for treating water for cooling towers and other processes (reverse osmosis rejection, regeneration of the anionic units of demineralization systems and wastewater), where pollutants such as silica, calcium and magnesium total hardness, suspended solids, organic materials, microorganisms, heavy metals, dyes and detergents, are reduced and/or removed, improving the water quality for its reuse in several industrial, semi-industrial or domestic processes, generating savings in terms of water and chemical products, which includes:
a) A ventury ejector system, which is basically an ejector favoring the water - gas (ozone) mix, allowing an optimal mix of water to be treated with ozone gas.
b) An oxygen concentration system, which separates nitrogen from oxygen present in atmospheric air, by means of a physical filtration process at a given pressure, where we may concentrate the oxygen needed as raw material to produce ozone.
c) An ozone generation equipment, that passes oxygen concentrated in the equipment mentioned above, through a high voltage reactor and the ozone needed to oxidize all pollutants present in the water to be treated is produced. The application of ozone gas has numerous purposes. The first one is the oxidation of pollutants causing an alteration in the morphological structure of the silica salt crystals, favoring the formation of sludge and therefore, optimizing the removal of silica from the water of the cooling tower, as well as a reaction due to the oxidation of the pollutants that favors the formation of solids which allow their separation from the water, achieving an optimization of the process.
d) A pH control system, with a sensor that measures the pH and sends a signal to a plc, which sends another signal to a system which conditions the pH, so as to keep it within a value between 6.5 and 9.0, by adding sulfuric, hydrochloric, nitric or any organic acid to lower the pH, or by adding an alkaline such as sodium hydroxide, sodium carbonate or any other chemical product that increases the water pH, so as to keep it within a value between 6.5 and 9.0.
e) A conductivity control system, with a sensor that measures the water conductivity and sends a signal to a plc, which sends another signal to a system which conditions the water conductivity value, so as to maintain it within a value between 100 and 20,000 micromhos, by adding sodium chloride or any chemical product that increases the water conductivity.
It is **characterized by**: f) An electrochemical cell with aluminum (iron or zinc) cells, where aluminum hydroxide is formed (or blocks of compacted and pressed aluminum, that may also be iron or zinc), that reacts with the pollutants present in the water, creating a sludge (electroflocculation), which is easily separated from water when applying the electrical current, at an amperage between 0.001 to 3 amperes per square centimeter, allowing an optimal current density to transfer the aluminum required to react with the pollutants present in the water to be treated, forming a sludge that is later separated from the water, thus allowing the reuse of treated water using this system, and, incorporating the filtering and ozonation processes, we obtain a better water quality.
g) A solid separation system or a filtering system that could use diverse processes, whether using a gravel, sand, anthracite or activated charcoal filtering system, vacuum filtering, solid from liquid separation through centrifugation, vacuum rotating filters, or any other process for solid - liquid separation, which allows a separation of solids formed in the water electrochemical reactor, depending on the amount of water to be treated.

10. This method, in accordance with claim 9 above, **characterized by** passing water to be treated through an electrochemical cell with aluminum plates and, after separating the formed sludge, it allows the reuse of treated water; the filtering, ozonation and conditioning of water by adding sodium chloride, obtaining a better water quality at a low cost.

11. The application of ozone, **characterized by** the oxidation of pollutants present in the water, before passing through the electrochemical cell with aluminum cells, favors the separation of solids and silica, and after filtration, it improves the water quality, favoring its reuse in the industry in general.

12. The method, pursuant to claim 9 above, **characterized by** an electrochemical cell with aluminum (iron, zinc or magnesium) plates or blocks (compacted, compressed or pressed), that, when inducing an optimal amperage, depending on the amount of water to be treated, produces aluminum (or metal) hydroxide, which works as a coagulant, capturing oxidized and not oxidized particles present in the water, forming compounds or floccules that separate water pollutants in form of a sludge.

13. Silica trapped in the sludge formed in accordance with claim 9 above, **characterized by** the electrolytic process of electrocoagulation / electroflocculation, due to the formation of aluminum or metal hydroxide, forming insoluble compounds that are separated from the water, favoring the flotation through the electrolytic reactor in view of the formation of the hydrogen bubbles produced by the cathodes, with the microbubbles of ozone gas, maintaining a water rising flow and avoiding sedimentation of such sludge, which is later separated from the water, by means of a filtering system.

14. This invention developed a new process achieved by incorporating basic technologies, which, when put together, allows us to obtain a technological innovation that removes 100% of silica and reduces the concentration of calcium and magnesium hardness salts, which cause the formation of encrustations, removes suspended solids and other pollutants present in water, which, treated with this new process, form a sludge that is later separated using a solid separation or filtering system.

15. This invention, pursuant to claim 14 above, allows the increase of concentration cycles in cooling towers, generating savings in terms of water and chemical products, in addition to keeping controlled the microbial propagation, which will allow the industry in general to replace the conventional industrial water treatment programs for this new technological alternative.

16. This new water treatment process, according to claim 14 above, allows to obtain excellent wastewater quality at a very appealing cost per cubic meter for the industry in general, interrelating the filtering, ozonation, electrochemistry, filtering and ozonation processes, that allow to carry out this industrial water and/or wastewater treatment process, achieving a water quality that complies with the required standards, allowing its reuse in diverse industrial processes and/or watering of green areas.

17. This process, developed in accordance with claim 14 above, **characterized by** the incorporation of basic technologies, concentrates oxygen contained in the environmental air, in view of the separation of nitrogen achieved through the gas separation process; such concentrated oxygen passes through a high voltage process, obtaining an optimal ozone production at a high concentration, that allows to carry out the oxidation of pollutants present in the water to be treated so that, later on, by incorporating an electrochemical cell with aluminum plates, may produce aluminum hydroxide, which, when reacting with the pollutants present in the water, may form an insoluble sludge that will be later separated from the water, by means of a filtration, vacuum or centrifuge system, thus obtaining water with a quality that allows its reuse for diverse industrial processes and/or watering of green areas.

18. The conditioning of water, pursuant to claim 14 above, **characterized by** the addition of sodium chloride to increase conductivity and decrease the voltage, so as to reduce the consumption of electric power in the process.

19. By treating wastewater and/or industrial water, in accordance with claim 14 above, we obtain water with a quality for its reuse, in compliance with the environmental standards determined for each particular case; the difference in the water quality to be obtained will be achieved with the optimal incorporation of these technologies, developing the system for each particular application and determining particular conditions in each case.

20. The use of an electrochemical system of electrocoagulation / electroflocculation / electroflotation with aluminum / iron / zinc / magnesium cells and other metals that remove silica from the water.

21. The use of an electrolytic cell with ozone, whether before or after (pre-ozonation of post-ozonation) (ozone / electrochemistry / clarification / filtration / ozone) for water treatment.

22. The removal of pollutants in the water by means of ozone and electrochemistry, in order to reduce silica salts, total hardness such as calcium and magnesium, chlorides, metals, greases and oils, dyes, organic material, chemical oxygen demand, biological oxygen demand, microorganisms in general, cyanide, arsenic, fluorides in any water type and quality.

23. The addition of a bromine salt, such as sodium bromide, to favor the microbial control through oxidation of the salt with the ozone in the treatment of water for cooling towers.

24. The electrochemical method to remove silica in any type, treatment and/or conditioning of water, whether processing or industrial water or wastewater, or any similar removal or reduction of silica in the water.

25. The use of any electrochemical system to remove and/or reduce silica, total hardness and any system, process and/or treatment of water for cooling towers, reverse osmosis rejection, system regeneration and/or demineralization plants for anionic-ionic exchange resins, wastewater or any other process related to removal of silica or total hardness from water.

26. The ozonized electrochemical reactor to form aluminum hydroxide and capture the pollutants present in the water, is optimized by controlling an adequate water flow and, with the implementation of screens as static mixers or any other agitation system, it manages to favor the incorporation of aluminum hydroxide formed in this system, to the pollutants present in the water to be treated, so as to later separate the traces of sludge that failed to be separated from the water by means of a filtering system.

27. The addition of a bromine salt to water treated with ozone favors the oxidation of pollutants, improving the control of microbial propagation of the water system for cooling towers; the application of bromine allows us to obtain regeneration by means of the ozone, since free bromine reacts with the pollutants or microorganisms, it decomposes and, the action of the ozone will cause a chemical reaction, forming bromides and bromates that allow the reactivation of the bromine's action in the water.
